# EUROPÄISCHE PATENTANMELDUNG

(11) **EP 1 306 627 A2**
(43) Veröffentlichungstag der Anmeldung: **02.05.2003**
(21) Anmeldenummer: 02021922.6
(22) Anmeldetag: 28.09.2002
(51) Int. Cl.: F24J 2/04, F24J 2/46, E04D 13/18

(54) **Vorrichtung zur Nutzung von Sonnenenergie**

(30) Priorität: 09.10.2001 DE 20116551 U
(71) Anmelder: Fischer Profil GmbH, 57250 Netphen (DE)
(72) Erfinder: Fryn, Wolfgang, 57080 Siegen (DE)
(74) Vertreter: Pürckhauer, Rolf, Dipl.-Ing.

(57) **Zusammenfassung**

Die Erfindung bezieht sich auf eine Vorrichtung zur Nutzung von Sonnenenergie, insbesondere bei Dach- und Wandelementen (1), die aus Profilblech (1a) aus Metall oder aus Sandwichelementen mit einem Kern aus Kunststoff-Hartschaum oder Mineralwolle, einer profilierten Außenschale aus Metall und einer profilierten oder glatten Innenschale aus Metall gebildet sind. Um eine Vorrichtung zu schaffen, die sich die relativ großen Dach- und Wandflächen von gewerblichen Bauten zu Nutzen macht, sind zwischen den Profilen (5) der Profilbleche (1a) bzw. den Profilen der Außenschale der Sandwichelemente Scheiben (6) aus transparentem Kunststoff eingesetzt. Die Scheiben (6) sind dabei in seitlich in den Profilen (5) eingeformte, über die gesamte Länge der Profile (5) verlaufende Sicken (7) eingesetzt und gehalten.

## Beschreibung

Die Erfindung bezieht sich auf eine Vorrichtung zur Nutzung von Sonnenenergie, insbesondere bei Dach- und Wandelementen, die aus Profilblechen aus Metall oder aus Sandwichelementen mit einem Kern aus Kunststoff-Hartschaum oder Mineralwolle, einer profilierten Außenschale aus Metall und einer profilierten oder glatten Innenschale aus Metall gebildet sind.

Der Erfindung liegt die Aufgabe zugrunde, eine Vorrichtung der angegebenen Gattung zu schaffen, die sich die relativ großen Dach- und Wandflächen von gewerblichen Bauten zu Nutzen macht.

Diese Aufgabe wird erfindungsgemäß durch eine Vorrichtung mit dem Kennzeichnungsmerkmalen des Patentanspruchs 1 oder 2 gelöst.

Zweckmäßige Weiterbildungen der Erfindung sind in den Unteransprüchen gekennzeichnet.

Die erfindungsgemäße Vorrichtung zeichnet sich vor allem dadurch aus, daß mit relativ einfachen und kostengünstigen Mitteln Dach- und Wandflächen direkt oder auch nachträglich mit Scheiben aus transparentem Kunststoff versehen werden können, wodurch zwischen Scheiben und Außenseiten der Profilbleche bzw. zwischen Scheiben und Außenschalen der Sandwichelemente Kanäle entstehen, in denen die entstehende warme Luft zu deren oberen Enden steigt, an denen dieselbe aufgefangen und Wärmespeichern mit Medien, z.B. Wasser, Öl, Steinmaterial o.dgl. zugeführt wird. Die gespeicherte Wärme kann beispielsweise für Heizzwecke verwendet werden.

Ferner kann in den durch die Glasflächen abgedeckten Kanälen die von innen nach außen gelangende Wärmeenergie aus einem mit Dach- und Wandelementen erstellten Gebäude aufgefangen und wieder- bzw. weiterverwendet werden.

Ausführungsbeispiele der erfindungsgemäßen Vorrichtung sind nachfolgend anhand der Zeichnung beschrieben. Dabei zeigt
- Fig. 1: einen Querschnitt durch eine Dach- oder Wandkonstruktion aus Profilblechen mit in Sicken eingesetzten Scheiben,
- Fig. 2: einen vergrößerten Ausschnitt II im Bereich eines Profiles des Profilbleches der Dach- oder Wandelemente aus Fig. 1,
- Fig. 3: einen vergrößerten Ausschnitt III im Bereich der Überlappung von Profilblechen der Dach- oder Wandelemente aus Fig. 1,
- Fig. 4: einen Querschnitt durch eine Dach- oder Wandkonstruktion aus Sandwichelementen mit in aufgeschraubte Halteleisten einsetzbaren Scheiben,
- Fig. 5: einen vergrößerten Ausschnitt V im Bereich eines Profiles der Außenschale der Dach- oder Wandelemente aus Fig. 3,
- Fig. 6: einen vergrößerten Ausschnitt VI im Bereich einer Längsstoßverbindung der Dach- oder Wandelemente aus Fig. 3 und
- Fig. 7: eine Querschnittdarstellung der Halteleiste vor dem Einsetzen der Schnur.

Die in den Figuren dargestellten Vorrichtungen zur Nutzung von Sonnenenergie kommen bei Dach- und Wandelementen 1, vorzugsweise bei gewerblichen Bauten, zum Einsatz. Die Dach- und Wandelemente 1 sind entweder aus Profilblechen 1a aus Metall oder aus Sandwichelementen 1b mit einem Kern 2 aus Kunststoff-Hartschaum oder Mineralwolle, einer profilierten Außenschale 3 aus Metall und einer profilierten oder glatten Innenschale 4 aus Metall gebildet.

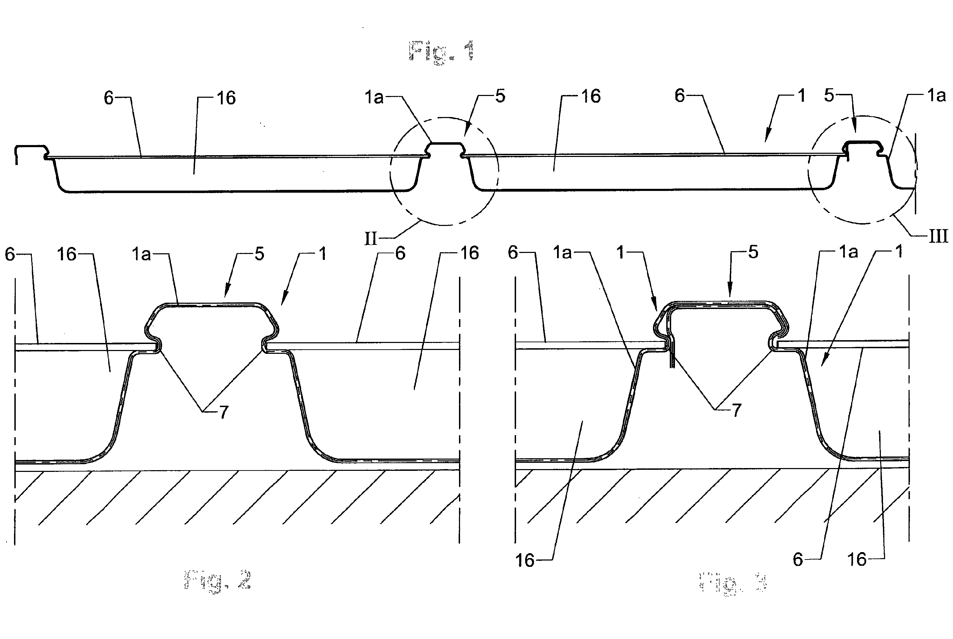

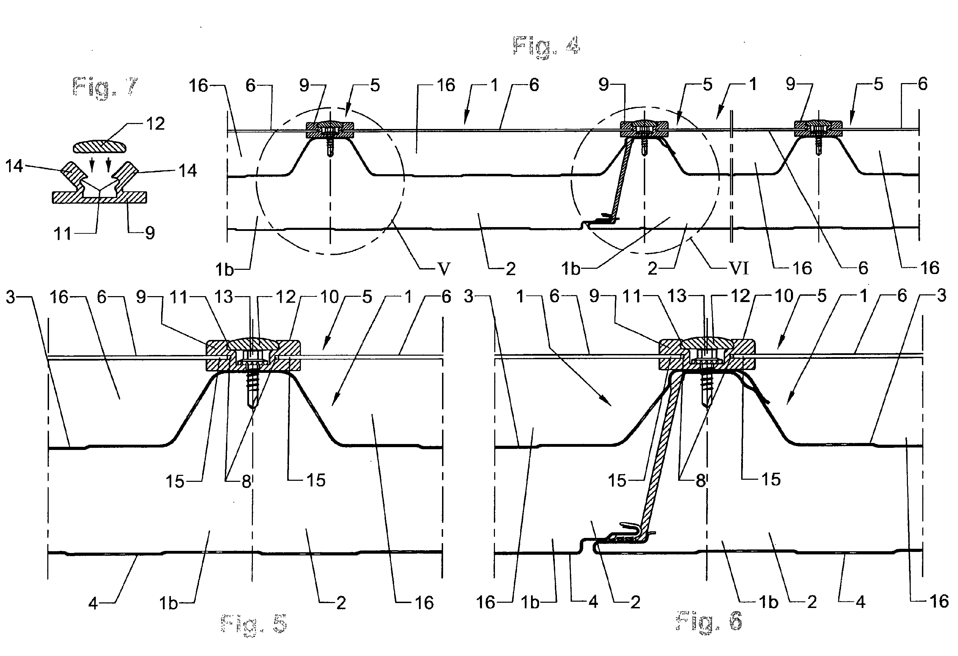

Bei dem in den Figuren 1 bis 3 dargestellten Ausführungsbeispiel, das Dach- und Wandelemente 1 als Profilbleche 1a zeigt, die werksseitig bereits für den Einsatz der Vorrichtung ausgebildet sind, besteht die Vorrichtung im wesentlichen aus zwischen den Profilen 5 der Profilbleche 1a (Ausführung in den Fign. 1 bis 3 dargestellt) bzw. zwischen den Profilen 5 der Außenschale 3 der Sandwichelemente 1b (Ausführung hier nicht dargestellt) einsetzbare Scheiben 6 aus transparentem Kunststoff , die in seitlich in den Profilen 5 eingeformte, über die gesamte Länge der Pofile 5 verlaufende Sicken 7 eingesetzt und gehalten sind. Zur Montage der Scheiben 6 werden dieselben so stark eingedrückt und somit verbogen, bis die Scheiben 6 in den Sicken 7 einrasten.

Das in den Figuren 4 bis 7 dargestellte Ausführungsbeispiel, das Dach- und Wandelemente 1 zeigt, die keine werksseitige Vorbereitung für den Einsatz der Vorrichtung enthält, weist ebenfalls zwischen den Profilen 5 der Profilbleche 1a (Ausführung hier nicht dargestellt) bzw. Profilen 5 der Außenschale 4 der Sandwichelemente 1b (Ausführung in den Fign. 4 bis 6 dargestellt) einsetzbare Scheiben 6 aus transparentem Kunststoff auf. Hierbei werden die Scheiben 6 jedoch in längsverlaufende Nuten 8 von auf die Profile 5 aufschraubbaren Halteleisten 9 eingesetzt und gehalten.

Die Halteleisten 9, die vorzugsweise aus einem gummiartigen Material wie EPDM o.dgl. bestehen, weisen in ihren oberen Seiten 10 jeweils eine Rille 11 auf, in die eine Schnur 12 einsetzbar ist, die für eine Abdichtung der unter der Schnur 12 angeordneten Schrauben 13 und den Schraubenlöchern in dem Profilblech 1a bzw. in der Außenschale 3 und dem Kern 2 der Sandwichelemente 1b dienen kann.

In erster Linie jedoch dient die Schnur 12 zum Festklemmen der Scheiben 6 in den Nuten 8 der Halteleiste 9. Wie in Fig. 7 dargestellt, sind die oberen Halteschenkel 14 der Halteleiste 9 so ausgebildet, daß dieselben schräg nach oben verlaufen. Durch das Einsetzen der Schnur 12 in die Rille 11 der Halteleiste 9 werden die oberen Halteschenkel 14 auf den äußeren Rand 15 der Scheiben 6 gedrückt, so daß die Scheiben 6 eingeklemmt und in allen Richtungen gehalten ist.

Diese Ausbildung der Halteleiste 9 sorgt dafür, daß ein Auswechseln der Scheiben 6 relativ einfach möglich ist. Dazu braucht lediglich die Schnur 12 aus der Rille 11 herausgezogen werden, wobei sich die oberen Halteschenkel 14 wieder in eine schräge Position bewegen und die Scheiben 6 freigeben.

Vorzugsweise sind die Außenseiten der Profilbleche 1a bzw. die Außenschalen 4 der Sandwichelemente 1b mit einer wärmeabsorbierenden Beschichtung versehen.

Durch die Anordnung der Scheiben 6 zwischen den Profilen 5 entstehen Kanäle 16, in denen, wie bereits erwähnt, die entstehende warme Luft zu deren oberen Enden zu Traufe oder Dachfirst steigt, wo die warme Luft aufgefangen und Wärmespeichern mit Medien, z.B. Wasser, Öl, Steinmaterial o.dgl. zugeführt wird, wobei die gespeicherte Wärme beispielsweise für Heizzwecke verwendet werden kann.

Alternativ kann durch Wärmepumpen die Temperatur erhöht werden, damit die Warmluft als Prozeßwärme verwendet werden kann.

### Bezugszeichen

- 1: Dach- und Wandelemente
- 1a: Profilbleche
- 1b: Sandwichelemente
- 2: Kern von 1
- 3: Außenschale von 1
- 4: Innenschale von 1
- 5: Profile von 3
- 6: Scheiben zwischen 5 in 7
- 7: Sicken in 5
- 8: Nuten in 9
- 9: Halteleisten auf 5
- 10: obere Seite von 9
- 11: Rille in 10
- 12: Schnur in 11
- 13: Schrauben für 9
- 14: obere Halteschenkel von 9
- 15: äußerer Rand von 6
- 16: Kanäle

## Patentansprüche

1. Vorrichtung zur Nutzung von Sonnenenergie, insbesondere bei Dach- und Wandelementen, die aus Profilblech aus Metall oder aus Sandwichelementen mit einem Kern aus Kunststoff-Hartschaum oder Mineralwolle, einer profilierten Außenschale aus Metall und einer profilierten oder glatten Innenschale aus Metall gebildet sind, **gekennzeichnet durch** zwischen den Profilen (5) der Profilbleche (1a) bzw. den Profilen (5) der Außenschale (4) der Sandwichelemente (1b) einsetzbare Scheiben (6) aus transparentem Kunststoff, die in seitlich in den Profilen (5) eingeformte, über die gesamte Länge der Profile (5) verlaufende Sicken (7) eingesetzt und gehalten sind.

2. Vorrichtung zur Nutzung von Sonnenenergie, insbesondere bei Dach- und Wandelementen, die aus Profilblechen aus Metall oder aus Sandwichelementen mit einem Kern aus Kunststoff-Hartschaum oder Mineralwolle, einer profilierten Außenschale aus Metall und einer profilierten oder glatten Innenschale aus Metall gebildet sind, **gekennzeichnet durch** zwischen den Profilen (5) der Profilbleche (1a) bzw. den Profilen (5) der Außenschale (4) der Sandwichelemente (1b) einsetzbare Scheiben (6) aus transparentem Kunststoff, die in längsverlaufende Nuten (8) von auf die Profile (5) aufschraubbaren Halteleisten (9) eingesetzt und gehalten sind.

3. Vorrichtung nach Anspruch 1 oder 2, **dadurch gekennzeichnet, daß** die Außenseite der Profilbleche (1a) bzw. die Außenschale (3) der Sandwichelemente (1b) mit einer wärmeabsorbierenden Beschichtung versehen sind.

4. Vorrichtung nach Anspruch 2, **dadurch gekennzeichnet, daß** die Halteleisten (9) jeweils in deren oberen Seite (10) eine Rille (11) aufweisen, in die eine Schnur (12) einsetzbar ist.

5. Vorrichtung nach Anspruch 2 oder 4, **dadurch gekennzeichnet, daß** die Halteleisten (9) aus einem gummiartigen Material wie EPDM o.dgl. bestehen.
